# EUROPÄISCHE PATENTSCHRIFT

(11) **EP 4 424 129 B1**
(45) Veröffentlichungstag und Bekanntmachung des Hinweises auf die Patenterteilung: **22.10.2025**
(21) Anmeldenummer: 24159115.5
(22) Anmeldetag: 22.02.2024
(51) Int. Cl.: A01B 29/04, B60B 19/00, B60B 3/08

(54) **ARBEITSRAD AUS SCHEIBENFÖRMIGEN GRUNDKÖRPERN**
WORKING WHEEL CONSISTING OF DISC-SHAPED BASE BODIES
ROUE DE TRAVAIL COMPOSÉE DE CORPS DE BASE EN FORME DE DISQUE

(30) Priorität: 22.02.2023 AT 501202023
(43) Veröffentlichungstag der Anmeldung: 04.09.2024
(73) Patentinhaber: Innovation-Farm Edtbauer OG, 4591 Molln (AT)
(72) Erfinder: EDTBAUER, Stefan, 4591 Molln (AT)
(74) Vertreter: Burger, Hannes

(56) Entgegenhaltungen:
- EP-A1- 0 452 198
- DE-U1- 29 514 893
- RU-C1- 2 754 597
- US-A1- 2009 200 049
- US-A1- 2009 272 470
- US-A1- 2015 158 332

## Beschreibung

Die Erfindung betrifft ein Verfahren zur Herstellung eines mittels zumindest zwei scheibenförmiger Grundkörper gebildeten Arbeitsrades, sowie ein Fahrzeug mit einem Arbeitsrad.

Für landwirtschaftliche Arbeitsaggregate sind unterschiedliche Arten von Rädern bekannt, welche insbesondere zum Befahren von steilen Hängen und unebenen Flächen ausgebildet sind.

Eine bekannte Ausführung sind Stachelwalzen, welche gehärtete Dornen an Ihrer Umfangsfläche aufweisen. Diese bieten einen besonders guten Halt gegen Abgleiten der Aggregaten, weisen aber den Nachteil auf, dass die Bodenbelüftung aufgrund der dichten Aufstandsflächen der Walzen benachteiligt ist, bzw. dies eine Verdichtung der Böden mit sich bringt.

Um dem entgegenzuwirken, gibt es im Stand der Technik Gitterräder, welche einen wesentlich höheren Anteil zur Bodenbelüftung beitragen, aber hinsichtlich Stabilität und Verschleißbeständigkeit, nur wenig zufriedenstellende Lösungen bereitstellen.

Aufgabe der vorliegenden Erfindung war es, die Nachteile des Standes der Technik zu überwinden und ein Arbeitsrad, sowie ein Verfahren zur Herstellung eines Arbeitsrad zur Verfügung zu stellen, mittels derer ein Benutzer in der Lage ist, zum einen die Bodenbelüftung sowie die weitere Schonung des Bodens zu gewährleisten und gleichzeitig die Anforderungen bezüglich Stabilität und Verschleißbeständigkeit zu erfüllen.

Diese Aufgabe wird durch ein Verfahren zur Herstellung eines Arbeitsrades gemäß den Ansprüchen gelöst sowie ein Fahrzeug für den Einsatz in unebenen Terrain (bzw. auch Offroad), welches zumindest ein erfindungsgemäßes Arbeitsrad aufweist.

Das Verfahren zur Herstellung des Arbeitsrades umfasst die Schritte;
- Bereitstellen von zumindest zwei scheibenförmigen Grundkörpern, wobei ein jeweiliger scheibenförmiger Grundkörper umfasst:
   - eine Längsmittelachse;
   - eine bezüglich der Längsmittelachse radial außenliegende Lauffläche, wobei an der Lauffläche radiale Erhebungen und radiale Vertiefungen ausgebildet sind, sodass mittels der radialen Erhebungen und der radialen Vertiefungen in einer Umfangsrichtung eine Außenkontur des scheibenförmigen Grundkörpers gebildet ist;
- Anordnen von Verbindungselementen zwischen den zumindest zwei scheibenförmigen Grundkörpern;
- Verbinden der zumindest zwei scheibenförmigen Grundkörper mit den Verbindungselemente, sodass die scheibenförmigen Grundkörper entlang ihrer Längsmittelachse beabstandet zueinander angeordnet sind und mittels der Laufflächen eine Radlauffläche des Arbeitsrades gebildet wird,
wobei die scheibenförmigen Grundkörper entlang der Lauffläche mittels eines thermischen Trennverfahrens behandelt werden, sodass die scheibenförmigen Grundkörper eine gleichmäßig gehärtete Randschicht an der Lauffläche aufweisen.

Der scheibenförmige Grundkörper wird mittels des thermischen Trennverfahrens aus einer Platte (vorzugsweise Metall) entlang der Außenkontur des scheibenförmigen Grundkörpers geschnitten. Mittels dieser Ausgestaltung ist es möglich, einen besonders gleichmäßigen Wärmeeintrag im Bereich der Lauffläche zu erzielen, um eine erfindungsgemäße Randschicht zu erhalten. Weiters kann damit der Schritt des Härtens und des Bereitstellens, bzw. Herstellens der Grundkörper in einem Arbeitsschritt kombiniert werden, um eine besonders energieeffiziente Herstellung zu ermöglichen.

Ein scheibenförmiger Grundkörper für ein Arbeitsrad, umfasst eine Längsmittelachse, sowie eine erste Stirnseite und eine gegenüberliegende zweite Stirnseite. Ferner weist der Grundkörper eine Lauffläche auf, wobei die Lauffläche bezüglich der Längsmittelsachse radial außenliegend am scheibenförmigen Grundkörper angeordnet ist und sich zwischen der ersten und zweiten Stirnseite in einer Umfangsrichtung des scheibenförmigen Grundkörpers erstreckt. An der sind Lauffläche radiale Erhebungen und radiale Vertiefungen ausgebildet, sodass mittels der radialen Erhebungen und der radialen Vertiefungen in Umfangsrichtung eine Außenkontur des scheibenförmigen Grundkörpers gebildet ist.

Ein mittels des thermischen Trennverfahrens hergestellter scheibenförmiger Grundkörper umfasst in Umfangsrichtung im Bereich der Lauffläche eine gehärtete Randschicht, die bezüglich der Längsmittelachse eine gleichmäßige Schichttiefe radial zur Außenkontur aufweist. Somit kann mittels der gehärteten Randschicht gleichzeitig die Lauffläche bzw. Verschleißfläche des Arbeitsrades ausgebildet werden, das zumindest zwei scheibenförmige Grundkörper umfasst.

Besonders vorteilhaft bei einer derartigen Ausgestaltung der Randschicht ist, dass die gesamte Lauffläche, nämlich im Bereich der Erhebungen als auch der Vertiefungen eine gewünschte Verschleißbeständigkeit aufweist und darüber hinaus die Erhebungen eine deutlich verbesserte Zähigkeit verfügen, sodass diese eine hohe Beständigkeit gegen Querkräfte aufweisen und somit eine wesentlich geringes Risiko hinsichtlich Sprödbrüchen und dergleichen aufweisen, wodurch eine hohe Lebensdauer und Einsatzfähigkeit der Grundkörper gewährleistet ist.

Bevorzugt kann dabei bezüglich der Außenkontur vorgesehen sein, dass die Schichttiefe der gehärteten Randschicht geringer ist als ein maximaler radialer Abstand zwischen benachbarten radialen Erhebungen und radialen Vertiefungen. Mittels dieser Ausgestaltung ist eine verbesserte Zähigkeit der Erhebung begünstigt.

Eine mögliche Weiterbildung sieht vor, dass eine axiale Höhe des scheibenförmigen Grundkörpers zwischen 2% und 8%, insbesondere 3 bis 6% eines Außendurchmessers des scheibenförmigen Grundkörpers beträgt. mittels der Erfindungsgemäßen Ausbildung ist eine besonders schmale und leichte Bauweise der Grundkörper ermöglicht.

Zudem können die Grundkörper an der Lauffläche weitere Strukturelemente ausgeformt, z.B. kleine Eingriffselemente, Zähne oder dergleichen, welche zur Vergrößerung einer Eingriffsfläche bezüglich einer Aufstandsfläche, Boden oder dergleichen dient und je nach Anwendungsfall, z.B. Härte des Bodens variieren kann.

Ferner wird die eingangs genannte Aufgabe auch durch ein Arbeitsrad gelöst, umfassend zumindest zwei eingangs genannte scheibenförmige Grundkörper, wobei die scheibenförmigen Grundkörper entlang ihrer Längsmittelsachse (zur Bildung einer Radachse) in einem Abstand zueinander angeordnet sind und mittels (bevorzugt stabförmiger) Verbindungselemente miteinander verbunden sind, sodass mittels der Laufflächen der scheibenförmigen Grundkörper eine Radlaufläche des Arbeitsrades ausgebildet ist.

Als Material für ein erfindungsgemäßes Arbeitsrad wird vorzugsweise Metall verwendet, insbesondere Stahl oder Aluminium.

Ferner weist ein erfindungsgemäßes Rad die Vorteile auf, dass dieses zum einen Mittels der Erhebungen der Grundkörper einen optimalen Eingriff in eine Bodenfläche ermöglicht, aber auch aufgrund deren Beabstandungen zueinander eine ideale Belüftung des Bodens ermöglicht.

Ein derartiges Arbeitsrad kann wie eingangs erwähnt in Landwirtschaftlichen Arbeitsmaschinen eingesetzt werden z.B. für Acker und Grünland, Bodenbelüftungsräder, aber auch für Maschinen im forstwirtschaftlichen Bereichen, sowie Baumaschinen. Grundsätzlich ist ein derartiges Arbeitsrad für alle Arten von unebenen Terrain bzw. Gelände oder dergleichen einsetzbar, sowie auch in Sümpfen, bzw. auch unter Wasser. Ebenso können alle Arten von Geländefahrzeugen, insbesondere jene, welche in der Regel nicht zum Fahren auf asphaltierten Straßen oder dergleichen vorgesehen sind, mit erfindungsgemäßen Arbeitsrädern versehen sein, wie z.B. auch Pistengeräte. Ferner kommen auch einspurige als auch mehrspurige Fahrzeuge in Frage.

Ferner kann die Form der Außengeometrie der scheibenförmigen Grundkörper, bzw. des Arbeitsrades je nach dieser Einsatzgebiete variieren und spitzenförmige Erhebungen aufweisen, für einen tiefen Eingriff in den Untergrund bzw. die Aufstandsfläche des Arbeitsrades, oder aber auch eher flache, Stufenförmige Erhebungen für Einsatzgebiete, bei denen eine größere Kontaktfläche der Erhebungen mit der Aufstandsfläche gefordert ist.

Darüber hinaus kann das Arbeitsrad auch als Walze einsetzbar sein. Diesbezüglich kann auch vorgesehen sein, dass die Abstände zwischen den scheibenförmigen Grundkörpern wesentlich geringer gewählt werden.

Eine mögliche Weiterbildung sieht vor, dass die Verbindungselemente radial außenliegend angeordnet sind, sodass zumindest teilweise mittels einer Außenfläche der Verbindungselemente ein Teil der Radlauffläche des Arbeitsrades ausgebildet ist. Somit ist eine bessere Verteilung der Aufstandslast auf die Räder ermöglicht. Ferner kann dies zur Aufarbeitung des Material eines zu befahrenden Bodens beitragen, sowie zu dessen Belüftung. Die Verbindungselemente können dabei bevorzugt ebenfalls im Bereich der Lauffläche gehärtet sein.

Besonders vorteilhaft kann sein, dass die zumindest zwei scheibenförmigen Grundkörper bezüglich ihrer jeweiligen Außenkontur in Umfangsrichtung versetzt zueinander angeordnet sind, sodass die radialen Erhebungen und Vertiefungen der jeweiligen scheibenförmigen Grundkörper bezüglich der Längsmittelachse nicht in einer gemeinsamen Flucht angeordnet sind. Mittels dieser Ausgestaltung ist eine besonders hohe Sicherheit gegen seitliches Abgleiten des Arbeitsrades an einem Hang oder dergleichen ermöglicht, da die einzelnen Erhebungen der Grundkörper in unterschiedlichen Spuren in Axialrichtung dem Abgleiten entgegenwirken.

Eine vorteilhafte Ausführungsform sieht vor, dass die zumindest zwei scheibenförmigen Grundkörper in Umfangsrichtung derart versetzt zueinander angeordnet sind, dass bezüglich einer Draufsicht auf eine Stirnseite des Arbeitsrades mittels der jeweiligen radialen Erhebungen der zumindest zwei scheibenförmigen Grundkörper im Bereich der Radlaufläche ein durchgängiges Profil mit konstantem Radius gebildet ist. Mit anderen Worten beschrieben werden die Vertiefungen eines Grundkörpers von den Erhebungen des anderen Grundkörpers in Draufsicht überdeckt. Diese Ausgestaltung weist den Vorteil auf, dass ein besonders harmonischer Rundlauf des Arbeitsrades gewährleistet werden kann, bzw. ein äußerst vibrationsfreier Lauf.

Eine besonders vorteilhafte Ausführungsform zeichnet sich dadurch aus, dass zumindest drei scheibenförmige Grundkörper angeordnet sind, wobei die zwei entlang einer Radachse des Arbeitsrades außenliegend angeordneten scheibenförmigen Grundkörper mittels durchgängiger Verbindungselemente verbunden sind und dass der zumindest eine entlang der Radachse innenliegend angeordneter scheibenförmiger Grundkörper von den durchgängigen Verbindungselementen durchsetzt ist. Mittels dieser Ausgestaltung ist es möglich, die Rotationsmomente der einzelnen Grundkörper ideal auf die anderen Grundkörper übertragen zu können, in dem die Verbindungselemente derartige Kräfte in Umfangsrichtung mittels der Durchsetzung übertragen können. Weiters ist dadurch ein verbesserter Halt der Verbindungselemente an den Grundkörpern gewährleistet, als wenn diese z.B. nur an den Stirnflächen angeschweißt wären. Diesbezüglich können bevorzugt axiale Durchbrüche im Grundkörper angeordnet sein. Ferner können die Durchbrüche in allen Grundkörpern ausgebildet sein und in einer axialen Flucht angeordnet sein.

Mittels des lokalen Härtens der Laufläche entlang der Außenkontur ist eine Erzielung einer Randschicht gemäß eines eingangs genannten Grundkörpers ermöglicht, wodurch wiederum die vorangegangen erwähnten Vorteile erzielbar sind. Mit einem thermischen Verfahren entlang der Lauffläche ist dabei eine gleichmäßige Behandlung entlang der Außenkontur gemeint.

Im Stand der Technik werden derartige Bauteile aufgrund der kostengünstigen Herstellung üblicherweise mittels Stanzen hergestellt, wobei mittels Stanzen ein nachträgliches Härten zum einen kompliziertere Schritte zum gleichmäßigen Härten der Oberfläche erfordern würde, als auch einen weiteren Bearbeitungsschritt, bzw. ein weiteres Aggregat.

In einer Weiterbildung kann vorgesehen sein, dass beim thermischen Trennverfahren eine Schnittgeschwindigkeit entlang der Außenkontur angepasst wird, sodass ein Wärmeeintrag im Bereich der radialen Erhebungen und Vertiefungen gleichmäßig ist. Mittels dieser Ausgestaltung ist ein besonders gleichmäßiger Wärmeeintrag ermöglicht, sowie auch eine gezielt gesteuerte Wärmeeinwirkung (langsame Geschwindigkeit - höherer Wärmeeintrag, erhöhte Geschwindigkeit - niedrigerer Wärmeeintrag).

Ferner kann vorgesehen sein, dass die scheibenförmigen Grundkörper axiale Durchbrüche zur Aufnahme der Verbindungselemente aufweisen und die Verbindungselemente in die Durchbrüche eingesetzt werden und mit den scheibenförmigen Grundkörpern verbunden werden, insbesondere stoffschlüssig verbunden. Mittels dieser Ausgestaltung ist eine besonders stabile Anordnung der Verbindungselemente und der Grundkörper zueinander ermöglicht, sowie ein Fügen mit besonders geringen Toleranzen.

Vorteilhaft kann sein, dass zumindest drei scheibenförmigen Grundkörper bereitgestellt werden, wobei der zumindest eine bezüglich einer Radachse innenliegend angeordnete scheibenförmigen Grundkörper axiale Durchbrüche zur Aufnahme der Verbindungselemente aufweist und die bezüglich der Radachse außenliegend angeordneten scheibenförmigen Grundkörper mittels axial durchgängiger Verbindungselemente verbunden werden, wobei die durchgängigen Verbindungselemente in die axialen Durchbrüche des zumindest einen innenliegend angeordneten scheibenförmigen Grundkörper eingesetzt werden und mit den scheibenförmigen Grundkörpern verbunden werden, insbesondere stoffschlüssig verbunden. Mittels dieser Ausgestaltung ist es möglich, die Rotationsmomente der einzelnen Grundkörper ideal auf die anderen Grundkörper übertragen zu können, in dem die Verbindungselemente derartige Kräfte in Umfangsrichtung mittels der Durchsetzung übertragen können, wodurch eine besonders hohe Stabilität der Verbindungselemente erreicht wird.

Ferner kann vorgesehen sein, dass zwischen zumindest zwei scheibenförmigen Grundkörpern zumindest ein Tragkörper angeordnet wird, wobei mittels des Tragkörpers eine bezüglich der Radlaufläche in Richtung zur Längsmittelachse versetzt angeordnete Tragfläche des Arbeitsrades ausgebildet ist. Diese Ausführung weist den Vorteil auf, dass mittels des Tragkörpers ein Einsinken des Arbeitsrades in unebenen Terrain auf besonders weichen Untergrund verhindert werden kann.

Wenn z.B. ein Fahrzeug mit einem erfindungsgemäßen Arbeitsrad z.B. in felsiger Umgebung auf einen Untergrund aufläuft, der z.B. Sumpf umfasst, kann einem Einsinken bzw. Auflaufen mittels einer Bodenfläche des Fahrzeuges oder dergleichen vorgebeugt werden. Ferner kann dies auch bei Pistengeräten angewandt werden, wenn diese harten Untergrund wie z.B. Eis befahren und vorübergehend auf Tiefschnee auflaufen.

Der Tragkörper kann bevorzugt aus einem Material mit hoher Reißfestigkeit bestehen, z.B. aus Nylon, Polyester oder Polyethylen- oder einer Kombination aus mehreren Materialien, wie Polypropylen, Polyester und Polyamid. Die Reißfestigkeit kann beispielsweise in einem Bereich von 2,5 kN bis 100 kN liegen.

Der zumindest eine Tragkörper kann sich dabei zur Gänze zwischen zwei (benachbarten) scheibenförmigen Grundkörper erstrecken (bezüglich einer Breite in Richtung der Längsmittelachse), oder nur in einem gewissen Bereich. Vorzugsweise bildet dieser in Radialrichtung betrachtet eine wesentlich größere projizierte Fläche aus als ein jeweiliger scheibenförmiger Grundkörper mittels seiner jeweiligen Lauffläche.

Bei z.B. landwirtschaftlichen Arbeitsrädern kann weiters vorgesehen sein, dass der Tragkörper in Form eines Filters vorgesehen ist, sodass dieser geringe Öffnungen aufweist, sodass Partikel oder Teile unter einer gewissen Korngröße durchfallen können.

Der Tragkörper kann beim Herstellungsvorgang eines Arbeitsrades, während dessen Zusammenbau eingesetzt werden. Bevorzugt ist aber vorgesehen, dass der Tragkörper bei einem bereits fertig geformten Arbeitsrad eingesetzt werden kann, sodass dieser auch im Bedarfsfall wieder entfernt oder ausgetauscht werden kann.

In einer Ausführungsform kann vorgesehen sein, dass die Verbindungselemente zwischen zumindest zwei scheibenförmigen Grundkörpern Ausnehmungen aufweisen, wobei der Tragkörper in den Ausnehmungen in Umfangsrichtung aufgenommen ist. Die Ausnehmungen können vorzugweise parallel zur Längsmittelachse verlaufen. Vorzugsweise ist der Tragkörper in Umfangsrichtung umlaufend ausgebildet. Beispielsweise kann dieser die Form eines endlose Bandes aufweisen. Bezüglich eines Endlosen Bandes sei zur Vollständigkeit darauf hingewiesen, dass dieses einen Bereich aufweisen kann, mittels dessen das Band geöffnet bzw. bezüglich seiner Längserstreckung aufgetrennt werden kann, sodass es entnommen werden kann.

Ferner kann dieser aber auch mittels mehrerer Segmente in Umfangsrichtung zusammengesetzt sein. In einer Ausführungsform kann der Tragkörper freilaufend in den Ausnehmungen aufgenommen sein. Alternativ können auch Befestigungsmittel, Klemmvorrichtungen oder dergleichen für den Tragkörper vorgesehen sein.

Alternativ oder zusätzlich kann auch vorgesehen sein, dass der Tragkörper oder ein zusätzlicher Tragkörper in Axialrichtung verlaufend angeordnet wird, sodass sich dieser zumindest von einem zum nächsten Scheibenförmigen Grundkörper erstreckt. Bei dieser Ausführungsform können vorzugsweise mehrerer Tragkörper, z.B. in Form von- in Axialrichtung - längserstreckenden Bändern in Umfangsrichtung eingesetzt werden. Für einen jeweiligen Tragkörper kann ein jeweiliger schiebenförmiger Grundkörper zweite axiale Durchbrüche aufweisen. Bezüglich einer kombinierten Anwendung kann vorgesehen sein, dass axial erstreckende Tragkörper und in Umfangsrichtung erstreckende Tragkörper vorgesehen sind. Bevorzugt können diese ineinander verschachtelt angeordnet sein, sodass sich diese ähnlich einem Webmuster überlappen.

Ferner sei erwähnt, dass der (bzw. die) Tragkörper aber auch innerhalb des Arbeitsrades mittels anderer Mittel befestigt werden kann, oder gegebenenfalls auch über eine Außenfläche der Verbindungselemente gespannt werden kann.

Bezüglich der Verwendung eines zuvor beschriebenen Tragkörpers in Anbetracht der Erfindung sei jedoch zudem erwähnt, dass dieser grundsätzlich auch bei einem Arbeitsrad verwendet bzw. vorgesehen sein kann, welches nicht mit einem thermischen Trennverfahren hergestellt wurde, jedoch die geometrischen Ausgestaltungen der vorangegangenen Erläuterungen (sowie in der folgende Beschreibung) aufweist, hinsichtlich der scheibenförmigen Grundkörper, sowie der Verbindungselemente.

Ferner weist ein Fahrzeug für den Einsatz in unebenen Terrain, Gelände oder dergleichen, welches zumindest ein eingangs erwähntes Arbeitsrad aufweist und/oder zumindest ein mit einem erfindungsgemäßen Verfahren hergestelltes Arbeitsrad aufweist, ebenfalls die erfindungsgemäßen Vorteile auf. Wie eingangs erwähnt kann das Arbeitsrad angetrieben oder mitlaufend sein, bzw. auch an einer starren Achse angeordnet sein.

Zum besseren Verständnis der Erfindung wird diese anhand der nachfolgenden Figuren näher erläutert.

Es zeigen jeweils in stark vereinfachter, schematischer Darstellung:
- Fig. 1: ein Arbeitsrad in schaubildlicher Darstellung;
- Fig. 2: ein erfindungsgemäßer scheibenförmiger Grundkörper;
- Fig. 3: ein Herstellungsvorgang eines scheibenförmiger Grundkörpers;
- Fig. 4: ein Herstellungsvorgang eines Arbeitsrades;
- Fig. 5: eine Landwirtschaftliche Arbeitsmaschine mit Arbeitsrädern gebildet aus scheibenförmigen Grundkörpern;
- Fig. 6: eine weitere Ausbildung eines Arbeitsrades,
- Fig. 7: eine Ausführungsform eines Arbeitsrades in Draufsicht
- Fig. 8: eine Ausführungsform eines Arbeitsrades in Schnittansicht;
- Fig. 9: eine Ausführungsform eines Arbeitsrades mit Tragkörper.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

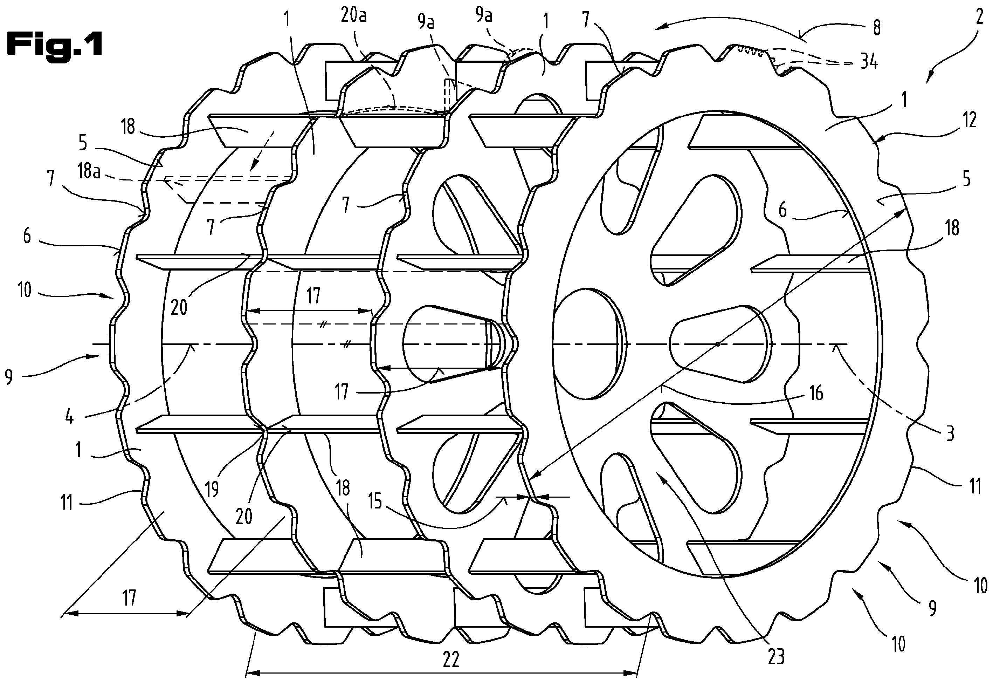

In Fig. 1 ist ein mögliches Arbeitsrad 2 dargestellt, welches aus mehreren scheibenförmigen Grundkörper 1 gebildet ist. Das Arbeitsrad 2 kann dabei ein angetriebenes oder lediglich mitlaufend rotierendes Rad einer Arbeitsmaschine ausbilden, oder aber auch ein nicht rotierendes Element ausbilden, z.B. bei einem Pflug oder dergleichen angewandt. Wie eingangs erwähnt können auch weitere bemannte und unbemannte Fahrzeuge, ein Pistengerät, eine Baumaschine (z.B. Bagger), oder auch spezielle Off-Road Fahrzeuge wie Quads mit erfindungsgemäßen Arbeitsrädern ausgestattet sein.

Ein jeweiliger scheibenförmiger Grundkörper 1 weist dabei eine Längsmittelachse 3 auf, die bevorzugt parallel zu einer Radachse 4 des Arbeitsrades 2 angeordnet ist, sowie eine erste Stirnseite 5 und einer gegenüberliegende zweite Stirnseite 6. Die Lauffläche 7 ist bezüglich der Längsmittelsachse 3 radial außenliegend am jeweiligen scheibenförmigen Grundkörper 1 angeordnet ist und erstreckt sich zwischen der ersten und zweiten Stirnseite 5,6 in einer Umfangsrichtung 8. An der Lauffläche 7 weist ein jeweiliger scheibenförmige Grundkörper 1 radiale Erhebungen 9 und radiale Vertiefungen 10 auf, sodass mittels der radialen Erhebungen 9 und der radialen Vertiefungen 10 in Umfangsrichtung 8 eine Außenkontur 11 des scheibenförmigen Grundkörpers 1 gebildet ist. Die Erhebungen 9 können vorzugsweise bezüglich Ihrer geometrischen Form einen Radius aufweisen, welcher z.B. dem Radius des Außendurchmesser 16 entspricht.

Die scheibenförmigen Grundkörper 1 sind entlang ihrer Längsmittelsachsen 3 bzw. entlang der Radachse 4 jeweils in einem Abstand 17 zueinander angeordnet sind und mittels (Quer-) Verbindungselemente 18 miteinander verbunden, sodass mittels der Laufflächen 7 der scheibenförmigen Grundkörper 1 eine Radlaufläche 19 des Arbeitsrades 2 ausgebildet ist. Die Verbindungselemente 18 sind bevorzugt stabförmig und können sich weiters über eine Gesamtbreite 22 des Arbeitsrades 2 erstrecken, sowie auch bevorzugt parallel zur Radachse 4.

Die zumindest zwei scheibenförmigen Grundkörper 1 können bezüglich ihrer jeweiligen Außenkontur 11 in Umfangsrichtung 8 versetzt zueinander angeordnet sind, sodass die radialen Erhebungen und Vertiefungen 9,10 der jeweiligen scheibenförmigen Grundkörper 1 bezüglich der Längsmittelachse 3 nicht in einer gemeinsamen Flucht angeordnet sind. Beispielsweise kann jeder zweite scheibenförmige Grundkörper 1 in einer gemeinsamen Flucht entlang der Radachse 4 angeordnet sein, wie in Fig. 1 dargestellt ist. Alternativ können auch alle Grundkörper in Umfangsrichtung 8 jeweils um einen Winkelbetrag versetzt zueinander angeordnet sein. Weiters sei erwähnt, dass alle scheibenförmigen Grundkörper 1 in Umfangsrichtung 8 bezüglich der Erhebungen und Vertiefungen dieselbe Außenkontur aufweisen können, wie dargestellt, aber auch unterschiedlich ausgebildet sein können. Weiters können die Erhebungen derart ausgebildet sein, dass diese sich bezüglich der Umfangsrichtung 8 in einem Winkel erstrecken, welcher zumindest dem Betrag eines Winkels zwischen zwei Erhebungen entspricht, sodass eine Länge der Erhebungen bezüglich der Umfangsrichtung 8 zumindest der Erstreckung der Vertiefungen entspricht und bevorzugt größer ist.

Bezüglich der Verbindungselemente 18 kann vorgesehen sein, dass diese bezüglich der Radachse 4 radial außenliegend angeordnet sind, sodass zumindest teilweise mittels einer Außenfläche 20 der Verbindungselemente 18 ein Teil der Radlauffläche 19 des Arbeitsrades 2 ausgebildet ist. Bevorzugt können die Verbindungselemente 18 im Bereich der Außenfläche 20 ebenfalls eine gehärtete Randschicht aufweisen. Ferner können die Verbindungselemente in einer möglichen Weiterbildung auch geometrische Ausformungen, Erhebungen oder dergleichen aufweisen, wie mit der gekrümmten Außenfläche 20a strichliert angedeutet ist.

Im dargestellten Beispiel der Fig. 1 umfasst das Arbeitsrad 2 beispielhaft vier scheibenförmige Grundkörper 1, wobei deren Anzahl nach Anwendung variieren kann, das Arbeitsrad aber aus zumindest zwei scheibenförmigen Grundkörper 1 gebildet ist. Zumindest einer der Grundkörper 1 weist bevorzugt bezüglich seiner Längsmittelachse 3 radial innenliegend angeordnet einen Befestigungsabschnitt 23 zur Montage an einer Radnabe oder dergleichen, oder eine Ausnehmung zur Montage an einer Welle. Dabei sei erwähnt, dass der Grundkörper 1, welcher den Befestigungsabschnitt 23 aufweist, auch bezüglich der Radachse 4 mittels einem der beiden axial außenliegenden Grundkörper 1 gebildet sein kann. Wie weiters dargestellt, kann dieser Grundkörper 1 Ausnehmungen aus Performancegründen, sowie Gewichtseinsparungen etc. aufweisen.

Die Erhebungen 9 sind in der Darstellung in der Form von stumpfen Zähnen ausgebildet, diese können aber auch spitz, aber auch oval oder dergleichen ausgebildet sein, wie in Fig. 1 mit den Erhebungen 9a strichliert angedeutet ist. Bevorzugt sind diese entsprechend ihrer Ausgestaltung gleichmäßig am Umfang verteilt angeordnet.

Ebenfalls können die scheibenförmigen Grundkörper, unabhängig von der gezeigten Ausführungsform, an der Lauffläche 7 Strukturelemente 34 aufweisen, z.B. Zähne oder andere Eingriffselemente, diese können an den Erhebungen 9 ausgeformt sein, und/oder auch in den Vertiefungen 10 wie in Fig. 1 strichliert angedeutet ist. Zur Vollständigkeit sei erwähnt, dass die Strukturelemente bevorzugt gleichmäßig über den Umfang verteilt angeordnet sind. Ferner können die Vertiefungen selbst durch derartige Strukturelemente 34 gebildet sein. Weiters können derartige Strukturelemente (an der Außenfläche) an den Verbindungselementen 18 ausgebildet sein.

Die scheibenförmigen Grundkörper 1 können mittels bezüglich der Radachse 4 durchgängiger Verbindungselemente 18 verbunden sein, es kann aber auch vorgesehen sein, dass sich die Verbindungselemente 18 lediglich bezüglich des Abstandes 17 von 2 benachbarten Grundkörpern erstrecken, und somit entlang der Radachse mehrere Verbindungselemente in einer Flucht angeordnet sind.

Darüber hinaus kann vorgesehen sein, dass mehrere Grundkörper 1 mittels durchgängiger Verbindungselemente 18 verbunden sind, und dass zwischen 2 Grundkörper die Verbindungselemente 18 in Umfangsrichtung 8 einen Versatz bezüglich der anderen Verbindungselemente aufweisen, wie in Fig. 1 mit den strichlierten Verbindungselement 18a angedeutet ist. In diesem konkreten Fall könnten z.B. wie in Fig. 1 dargestellt, ausgehend von rechts nach links die ersten 3 Grundkörper mittels durchgängiger oder zumindest in einer Flucht angeordneten Verbindungselement 18 verbunden sein, und der 3. Und 4. Grundkörper mittels der in Umfangsrichtung versetzten Verbindungselemente 18a verbunden sein. Weiters wäre auch eine alternierende Anordnung der Verbindungselemente nach jedem 2. Grundkörper denkbar.

Eine Höhe 15 der jeweiligen scheibenförmigen Grundkörpers 1 kann zwischen 2% und 8%, insbesondere 3% bis 6%, eines Außendurchmessers 16 des scheibenförmigen Grundkörpers 1 betragen, z.B. kann der Außendurchmesser 16 500mm betragen und die Höhe 20mm. Der Innendurchmesser der Grundkörper 1 (mit Ausnahme jenem aufweisend den Befestigungsabschnitt, sofern dieser derart radial innenliegend ausgebildet ist) kann bevorzugt zwischen 70% und 85 % des Außendurchmessers betragen. Wie dargestellt können bevorzugt alle Grundkörper den gleichen Außendurchmesser aufweisen. Bei Verwendung des Arbeitsrades in einer Baumaschine oder dergleichen können dieses natürlich auch wesentlich größer dimensioniert sein.

Als Material für die Grundkörper wird vorzugsweise Stahl verwendet, es kann aber auch Aluminium verwendet werden. Bevorzugt kann für die Verbindungselemente dasselbe Material verwendet werden. Zumindest die zwei bezüglich der Radachse 4 axial außenliegend angeordneten scheibenförmigen Grundkörper 1 weisen dabei eine erfindungsgemäße, gehärtete Randschicht auf, wobei bevorzugt alle Grundkörper 1 des Arbeitsrades derart ausgebildet sind.

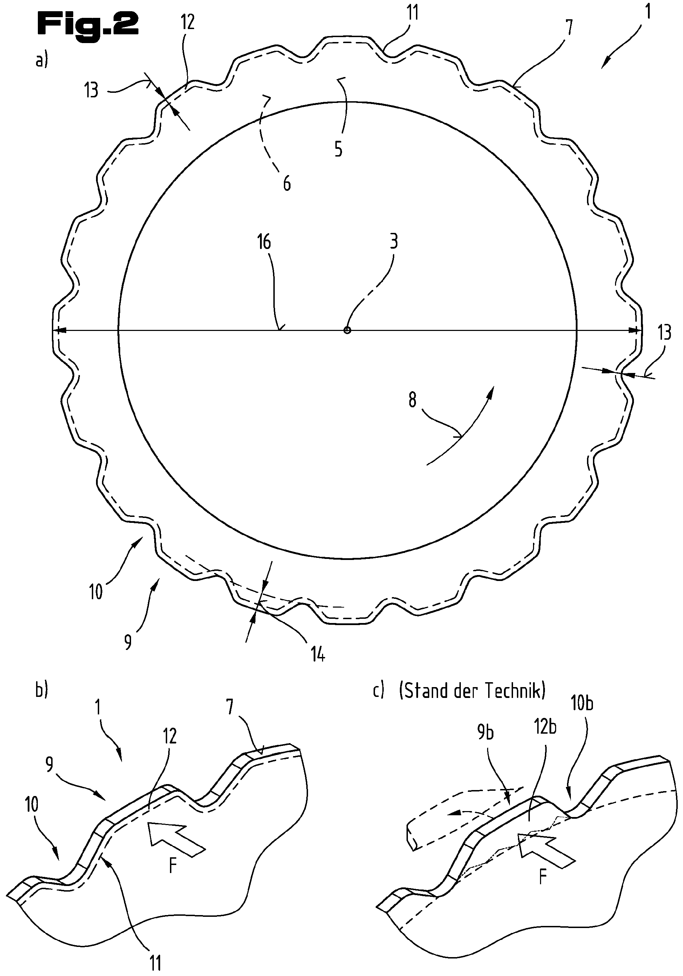

Diesbezüglich ist in Fig. 2 ein scheibenförmigen Grundkörper 1 dargestellt, dieser weist in Umfangsrichtung 8 im Bereich der Lauffläche 7 eine gehärtete Randschicht 12 auf, wobei die Schichttiefe 13 der gehärteten Randschicht 12 radial gleichmäßig zur Außenkontur 11 ist, wie in Fig. 2 a) in Draufsicht auf die Stirnseite 5 des scheibenförmigen Grundkörpers 1 dargestellt ist. Mit anderen Worten beschrieben ist die Schichttiefe 13 der Randschicht 12 in einem (gleichmäßigen) Offset zur Außenkontur 11, bzw. zu den radialen Erhebungen und Vertiefungen 9,10 ausgebildet, und zwar entlang der Lauffläche 7.

Besonders vorteilhaft bei dieser Ausgestaltung ist, dass die Eigenschaften der scheibenförmigen Grundkörper 1 hinsichtlich Verschleißbeständigkeit und Härte der Lauffläche 7, aber auch Zähigkeit und Widerstandsfähigkeit des Basiskörpers optimal kombiniert werden. So weist ein erfindungsgemäßer scheibenförmiger Grundkörper 1, bzw. ein damit gebildetes Arbeitsrad, verbesserte Eigenschafen hinsichtlich seiner Verschleißbeständigkeit auf, sowie eine verbesserte Beständigkeit gegen Querkräfte, die auf den Grundkörper wirken. Diesbezüglich ist in Fig. 2 b) eine erfindungsgemäße Randschicht 12 und in c) ein normal gehärteter Scheibenkörper gegenübergestellt. Die Lauffläche 7 des erfindungsgemäßen Grundkörpers in b) weist eine durchgängige Randschicht 12 auf, sowohl in den Erhebungen 9 als auch in den Vertiefungen 10 um die Anforderungen durch die Beanspruchungen der Lauffläche im Betrieb zu erfüllen und eine hohe Zähigkeit, um ein Brechen oder Biegen der Erhebungen durch Querkräfte entgegenzuwirken.

Ein gewöhnlich gehärteter Randbereich gemäß c) weist eine ungleichmäßige Randschicht 12b bezüglich der Außenkontur auf, sowie ein daraus resultierendes, wesentlich spröderes Verhalten gegenüber der auftretenden Querkräfte, was zur Verbiegung oder zum Bruch der Erhebungen 9b bei Querbelastungen führt. Ferner kann mittels derartiger Härteverfahren im Bereich der Vertiefungen 10b z.B. keine ausreichende Härte der Lauffläche erzielt sein, bzw. dieser Bereich nicht gehärtet sein, was wiederum eine schlechte Verschleißbeständigkeit der Lauffläche in den Bereiche der Vertiefungen mit sich bringt.

Bevorzugt ist die Schichttiefe 13 der gehärteten Randschicht 12 derart gewählt, dass diese geringer ist als ein maximaler radialer Abstand 14 zwischen unmittelbar benachbarten radialen Erhebungen 9 und radialen Vertiefungen 10, sodass die Erhebungen eine verbesserte Zähigkeit aufweisen. Vorzugsweise ist die Schichttiefe wesentlich geringer als ein radialer Überstand der Erhebungen.

Die gleichmäßige Schichttiefe 13 kann mittels eines thermischen Behandlungsverfahrens erzielt werden, indem die Laufläche entlang der Außenkontur, nämlich entlang der Erhebungen und Vertiefungen gleichmäßig lokal erhitzt und anschließend abgekühlt wird.

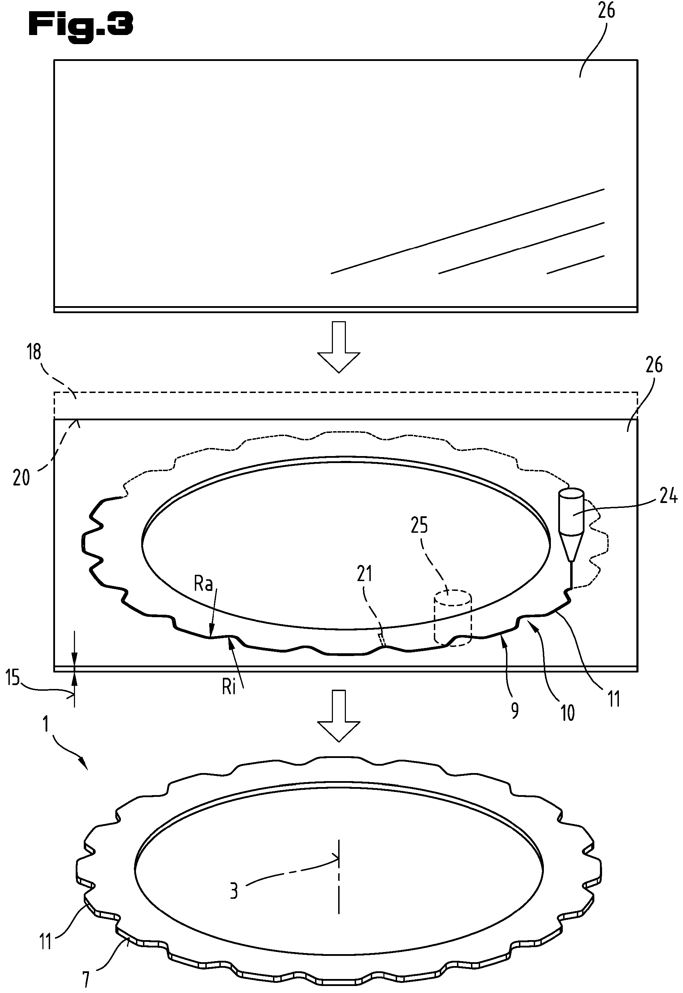

Wie eingangs erwähnt, erfolgt dies besonders bevorzugt mittels eines thermischen Trennverfahrens, z.B. Laserschneiden oder Plasmaschneiden. Je nach Dimensionierung der herzustellenden Grundkörper kann das thermische Schneidverfahren hinsichtlich Plattenstärke und den erforderlichen Wärmeeintrag gewählt werden. Wie in Fig. 3 dargestellt, kann dies in einem gemeinsamen bzw. in einem einzigen Herstellungsschritt erfolgen, indem das Bereitstellen der scheibenförmiger Grundkörper 1 mittels des Schneidens aus einer Werkstückplatte 26 erfolgt. Wie eingangs erwähnt kann das Plattenmaterial bevorzugt Stahl umfassen, bzw. aus einem Stahlblech gebildet sein. Dabei wird zumindest die Lauffläche 7 entsprechend der Außenkontur 11 aus der Platte thermisch geschnitten. Bevorzugt kann dies über eine Maschinensteuerung z.B. einer CNC-Steuerung erfolgen.

Ferner kann zusätzlich zu dem thermischen Trennwerkzeug 24 ein Kühlwerkzeug 25 vorgesehen sein, welches ebenfalls der Außenkontur 11 folgt. Beispielsweise kann das Kühlwerkzeug einen Kühlmittelauslass aufweisen, über welchen entlang der Außenkontur ein Kühlmittel an den Erhebungen und Vertiefungen aufgebracht wird. Eine Kühlung von beiden Stirnseiten wäre auch denkbar.

Je nach Anwendungsfall und gewünschter Eigenschaften kann auch ein Abkühlvorgang bei Raumtemperatur erfolgen, bzw. bei auch einer gekühlten Atmosphäre von -20 bis +20 °C. Bevorzugt kann somit die gesamte Radlauffläche eines Arbeitsrades mittels des thermischen Trennverfahrens hergestellt sein und an jedem Grundkörper eine gleichmäßige Randschicht aufweisen.

Zur Erzielung einer besonders gleichmäßigen Schichttiefe kann beim thermischen Trennverfahren eine Schnittgeschwindigkeit entlang der Außenkontur 11 angepasst werden, sodass ein Wärmeeintrag im Bereich der radialen Erhebungen und Vertiefungen 9,10 gleichmäßig ist. So kann bei Innenradien Ri, bei denen der Wärmeeintrag aufgrund der radialen Kontaktflächen größer ist, z.B. im Bereich der Vertiefungen, die Schnittgeschwindigkeit erhöht werden und bei Außenradien Ra oder dergleichen bei denen der Wärmeeintrag aufgrund der geringeren Kontaktflächen kleiner ist, z.B. im Bereich der Erhöhungen, die Schnittgeschwindigkeit verringert werden. Dies gilt ebenso für innenliegende und außenliegende Flächen der Außenkontur, welche keine Radien aufweisen. Zur Vollständigkeit sei erwähnt, dass z.B. bei einem Laserschneidverfahren die Schnittgeschwindigkeit der Bewegungsgeschwindigkeit entspricht, mit der das Trennwerkzeug entlang der Außenkontur bewegt wird. Alternativ kann auch vorgesehen sein, dass anstelle der Schnittgeschwindigkeit die Leistung bzw. Energie des Trennwerkzeuges in diesen Bereichen erhöht bzw. verringert wird.

Das Thermische Trennverfahren kann ferner auch zur Herstellung der Durchbrüche 21 verwendet werden, welche zur Aufnahme der Verbindungselemente vorgesehen sind, bzw. von diesen durchsetzt sind, wie strichliert angedeutet ist, beziehungsweise auch zur Herstellung des Befestigungsabschnittes, sowie der erwähnten Strukturelemente, etc. Ferner können auch die Verbindungselemente 18 derart aus einer Platte gefertigt werden, z.B. in Form von Streifen, welche zumindest entlang ihrer Außenfläche 20 aus der Platte mit entsprechender Breite geschnitten werden, sodass die gesamten Bestandteile des Arbeitsrades mittels desselben Verfahrens hergestellt werden können und jeweils eine gehärtete Randschicht aufweisen.

Wie eingangs erwähnt kann das Trennverfahren im Zuge des Verfahrens zur Herstellung des Arbeitsrades 2 erfolgen, nämlich im Schritt des Bereitstellens der zumindest zwei scheibenförmigen Grundkörpern 1

Das Anordnen von Verbindungselementen 18 zwischen den zumindest zwei scheibenförmigen Grundkörpern 1 sowie das Verbinden der zumindest zwei scheibenförmigen Grundkörper 1 mit den Verbindungselemente 18 wird im Folgenden beispielhaft erläutert.

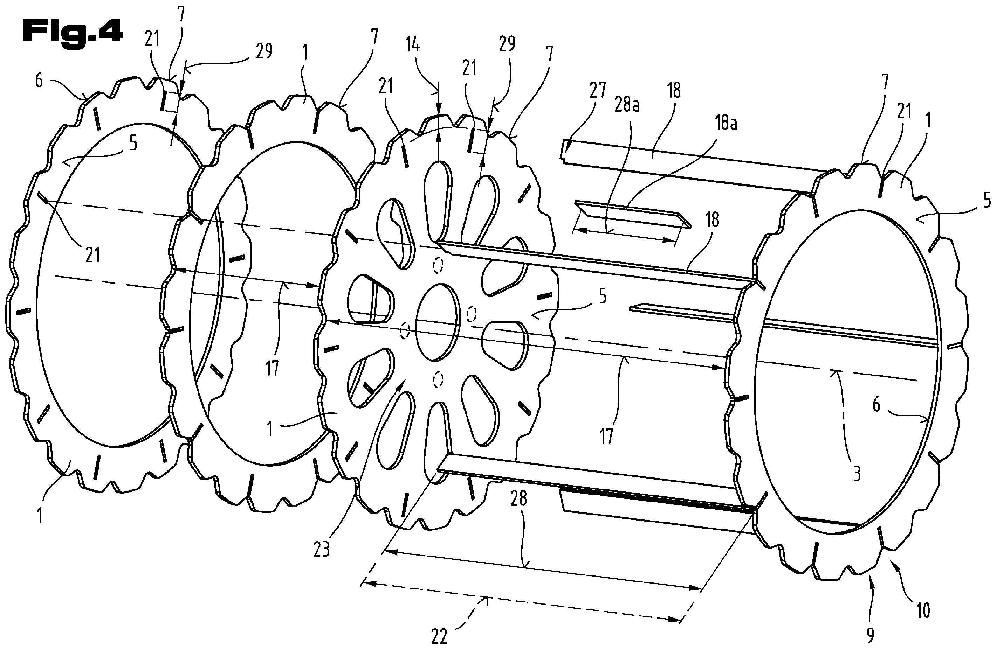

Ferner kann vorgesehen sein, dass zumindest drei scheibenförmige Grundkörper 1 angeordnet sind, wobei die (zwei) entlang einer Radachse 4 des Arbeitsrades 2 an beiden axialen Enden außenliegend angeordneten scheibenförmigen Grundkörper 1 mittels durchgängiger Verbindungselemente 18 verbunden sind und dass der zumindest eine entlang der Radachse 4 innenliegend angeordneter scheibenförmiger Grundkörper 1 von den durchgängigen Verbindungselementen 18 durchsetzt ist. Hierfür ist in Fig. 4 ein möglicher Fügeschritt zur Herstellung des Arbeitsrades 2 dargestellt, wobei die einzelnen scheibenförmigen Grundkörper 1 auf die Verbindungselemente 18 entlang ihrer Längsmittelachse aufgeschoben werden. Das Verbinden der Grundkörper mit den Verbindungselementen 18 erfolgt, bevorzugt stoffschlüssig, z.B. mittels Schweißen, weiters können diese auch verklebt oder gelötet werden, bzw. mechanisch über Schnappen.

Das Anordnen von Verbindungselementen 18 zwischen den zumindest zwei scheibenförmigen Grundkörpern 1 kann beispielsweise derart erfolgen, dass diese bereits an zumindest einem der Grundkörper 1 befestigt sein können, wie dargestellt, und dann mit den weiteren Grundkörpern 1 zusammengefügt werden. Es kann aber auch vorgesehen sein, dass diese erst nachträglich nach dem Anordnen an allen Grundkörpern befestigt werden.

Die beiden bezüglich der Radachse 4 axial außenliegenden scheibenförmigen Grundkörper 1 können beispielsweise (radial) kleinere Durchbrüche 21 aufweisen, sodass die Verbindungselemente 18 mittels eines Absatzes 27 oder dergleichen in Form einer Stufe in Radial- bzw. Axialrichtung an den jeweiligen Stirnseiten 5,6 dieser Grundkörper 1 anliegen, wie angedeutet ist. So können die Durchbrüche 21 der axial außenliegenden angeordneten Grundkörper eine geringere radiale Breite 29 aufweisen als die Durchbrüche 21 der axial innenliegenden angeordneten scheibenförmigen Grundkörper 1. Die Verbindungselemente 18 können somit eine axiale Länge 28 aufweisen, die der Gesamtbreite 22 des Arbeitsrades 2 entspricht.

Weiters kann vorgesehen sein, dass die axial außenliegen angeordneten scheibenförmigen Grundkörper 1 keine Durchbrüche aufweisen, oder lediglich Vertiefungen an der jeweils bezüglich der Radachse innenliegenden Stirnseite. Somit würde die axiale Länge 28 der durchgängigen Verbindungselemente 18 der Gesamtbreite abzüglich der Höhe 15 der zwei scheibenförmigen Grundkörper entsprechen (bzw. unter Berücksichtigung von erwähnten Vertiefungen).

Weiters vorteilhaft bei dieser Ausgestaltung ist, dass die Abstände 17 der einzelnen Grundkörper 1 zueinander variiert werden können, sodass diese in unterschiedlichen Abständen 17 angeordnet sind. Beispielsweise können die axial außenliegend angeordneten Grundkörper 1, insbesondere jene, welche in einem montierten Zustand an einem Fahrzeug außenliegend angeordnet sind, einen kürzeren Abstand 17 aufweisen, sodass die Biegemomente im Betriebszustand auf die Verbindungselemente 18 im axial äußeren Bereich geringer sind. Zur Anordnung der Grundkörper in unterschiedlichen oder gleichmäßigen Abständen 17 können hierfür nicht dargestellte Abstandhalter vorgesehen sein, welche zum Ausrichten beim Fügen der Grundkörper und der Verbindungselemente dienen.

Ferner ist in Fig. 4 ein Verbindungselement 18a angedeutet, welches z.B. nur lediglich zwischen zwei Stirnseiten von benachbarten scheibenförmigen Grundkörpern 1 angeordnet sein kann und somit eine kürzere axiale Länge 28a aufweist, um lediglich zur Querstabilisierung beizutragen, bzw. zur Aufnahme von hauptsächlich axial wirkenden Kräften.

Ferner kann vorgesehen sein, dass die radialen Abstände 14 bzw. Vorsprünge der Erhebungen 9 der axial innenliegenden Grundkörper größer sind als die der axial außenliegend angeordneten, da die axial außenliegenden größere Querbelastungen erfahren als die axial innenliegenden.

Wie bereits erwähnt, kann aber auch vorgesehen sein, dass zumindest 3 scheibenförmige Grundkörper mittels durchgängiger Verbindungselemente derart verbunden sind, und zusätzlich an einem bezüglich dieser 3 außenliegend angeordneten Grundkörper ein weiterer Grundkörper angeordnet ist, welcher mit bezüglich der Umfangsrichtung versetzten Verbindungselemente an dem außenliegend angeordneten Grundkörper angebracht ist.

Bezüglich einer nachträglichen Behandlung kann das Arbeitsrad noch beschichtet oder weiter behandelt werden, zum Schutz vor Korrosion, bzw. auch zur Änderung dessen Optik. Dabei sei auf die aus dem Stand der Technik bekannten Anwendungen hingewiesen, z.B. Lackieren, Pulverbeschichten, elektrolytische Beschichtungen, Verzinken oder dergleichen.

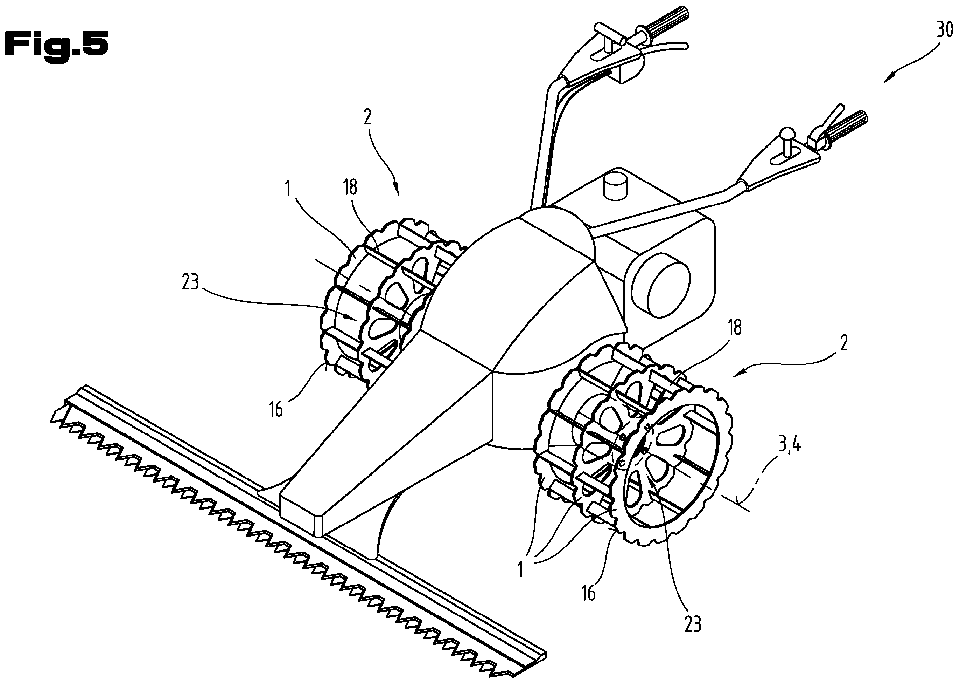

In Fig. 5 ist als Beispiel für ein Fahrzeug eine Landwirtschaftliche Arbeitsmaschine 30 dargestellt, welche zwei erfindungsgemäße Arbeitsräder 2 aufweist. Die Arbeitsmaschine ist beispielhaft als Balkenmäher dargestellt, sie kann aber auch andere, aus dem Stand der Technik bekannte Arbeitsmaschinen oder Feldfahrzeuge umfassen und auch mehrere Arbeitsräder 2 aufweisen. Derartige Fahrzeuge und Maschinen werden oft in Einsatzgebieten mit starken Gefällen verwendet, wodurch die Querkräfte auf die Räder besonders hoch sind, wodurch die erfindungsgemäße Ausgestaltung der Grundkörper besonders vorteilhaft ist. Die jeweiligen Arbeitsräder 2 sind dabei mittels zumindest einen Grundkörper, der einen Befestigungsabschnitt 23 aufweist, an einer Radnabe oder dergleichen der Arbeitsmaschine 30, bzw. des Fahrzeuges befestigt. Bei Verwendung des Arbeitsrades als Antriebsrad, kann ein Fahrzeug bevorzugt jedes Antriebsrad in Form des Arbeitsrades umfassen.

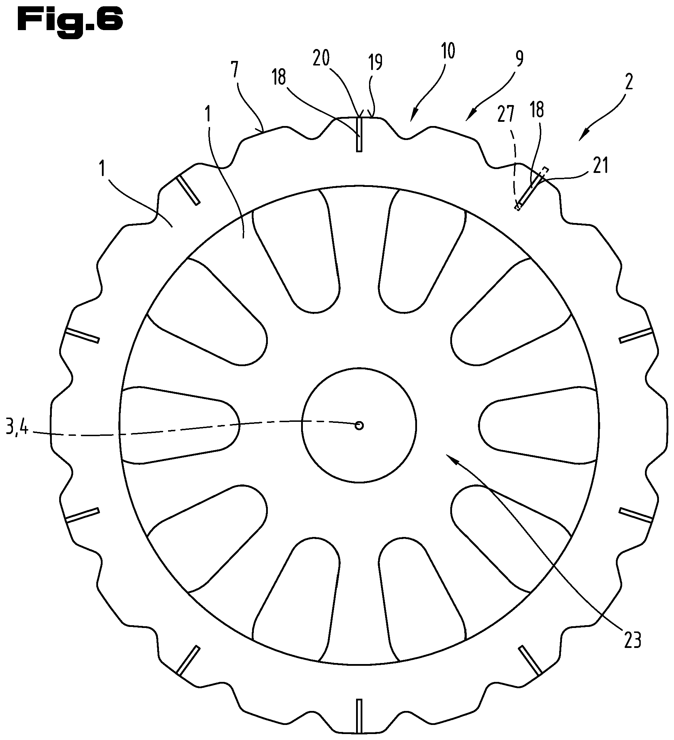

In Fig. 6 ist eine weitere mögliche Ausbildung eines Arbeitsrades 2 in Seitenansicht dargestellt, bei dem zumindest zwei scheibenförmige Grundkörper 1 angeordnet sind, bei denen die Außenflächen 20 der Verbindungselemente an allen scheibenförmigen Grundkörpern 1 außenliegend angeordnet ist, sodass diese zur Gänze einen Teil der Radlauffläche 19 bilden. Bei dieser Ausgestaltung können die Verbindungselemente 18 auch von radialer Richtung in die Durchbrüche 21 der Grundkörpern 1 eingesetzt werden, da diese radial nach außen offen sind, wodurch die Verbindungselemente 18 in einem zusammengesetzten Zustand des Arbeitsrades 2 auch einen Teil der Lauffläche der Grundkörper 1 ausbilden. Vorteilhaft hierbei ist, dass selbst durchgängige Verbindungselemente 18 an der Außenfläche 20 in Radialrichtung unterschiedliche Profile aufweisen können, sowie radial innenliegende Absätze 27 zur Abstützung an den Stirnseiten von jeden Grundkörper, bei der Verwendung von mehr als zwei.

Die Grundkörper können wie dargestellt in einer Flucht angeordnet sein, oder aber auch versetzt zueinander.

In der Fig. 6 ist eine weitere und gegebenenfalls für sich eigenständige Ausführungsform der/des Arbeitsrades gezeigt, wobei wiederum für gleiche Teile gleiche Bezugszeichen bzw. Bauteilbezeichnungen wie in den vorangegangenen Figuren verwendet werden. Um unnötige Wiederholungen zu vermeiden, wird auf die detaillierte Beschreibung in den vorangegangenen Figuren hingewiesen bzw. Bezug genommen.

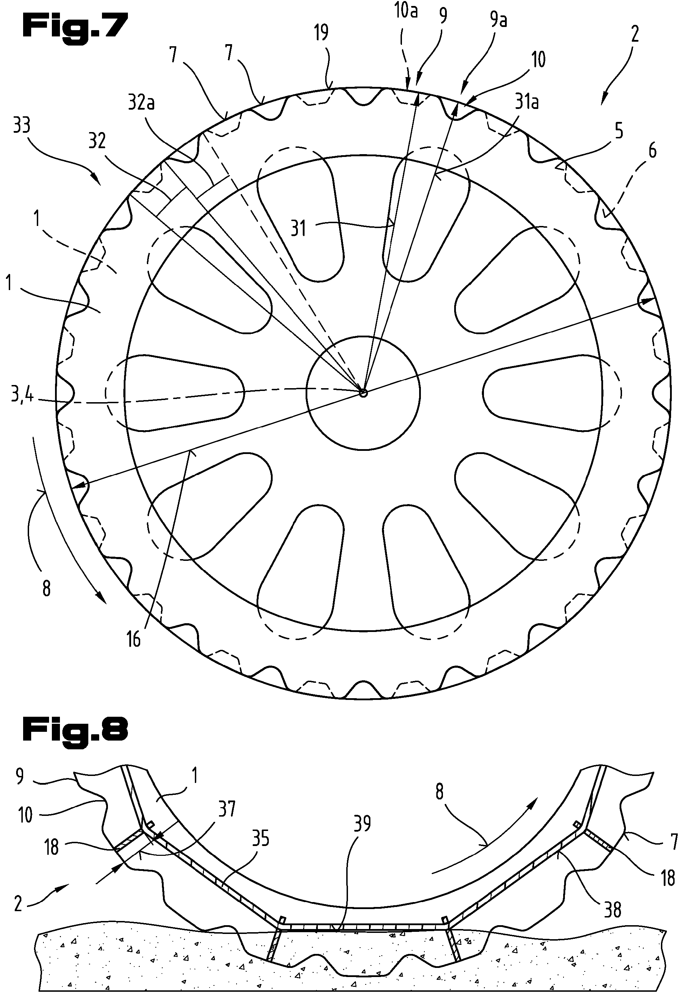

Wie in Fig. 7 dargestellt, können die scheibenförmigen Grundkörper 1 des Arbeitsrades 2 bevorzugt derart zueinander versetzt angeordnet sein, dass bezüglich einer Draufsicht auf eine Stirnseite des Arbeitsrades 2 bzw. der Stirnseite 5 (,6) der scheibenförmigen Grundkörper mittels zwei bezüglich der Längsmittelachse 3 nebeneinander angeordneten Grundkörpern in Umfangsrichtung 8 ein durchgängiger bzw. konstanter Radius gebildet ist, sodass mittels der jeweiligen Laufflächen 7, bzw. der jeweiligen Erhebungen 9, 9a der zwei Grundkörper in der Draufsicht ein geschlossenes (Kreis-)Profil 33 an der Radlauffläche 19 gebildet ist, sodass die Vertiefungen 10, 10a von den Erhebungen 9, 9a des benachbarten Grundkörpers in einer jeweiligen Draufsicht auf die jeweiligen Stirnseiten 5, 6 verdeckt sind.

Diesbezüglich weisen die Erhebungen 9, 9a der zwei benachbarten Grundkörper jeweils einen Radius 31 auf (vorzugsweise entsprechend dem Radius des Außendurchmessers 16), welcher sich in Umfangsrichtung 8 zumindest bezüglich einer Weite bzw. einem Winkel 32, 32a zwischen zwei Erhebungen des benachbarten Grundkörpers erstreckt, wobei die Radien 31, 31a der jeweiligen Erhebungen der zwei Grundkörper bevorzugt gleich groß sind.

Wie weiters dargestellt, können die Vertiefungen 10, 10a der Grundkörper, unabhängig von der gezeigten Ausführungsform, geometrisch unterschiedlich ausgebildet sein. Ferner können auch erwähnte Strukturelemente ausgeformt sein, insbesondere in den Vertiefungen.

Weiters kann vorgesehen sein, dass sich diese Ausbildung bezüglich des Profils 33 mittels einer versetzten Anordnung der Grundkörper paarweise entlang der Radachse 4 wiederholt.

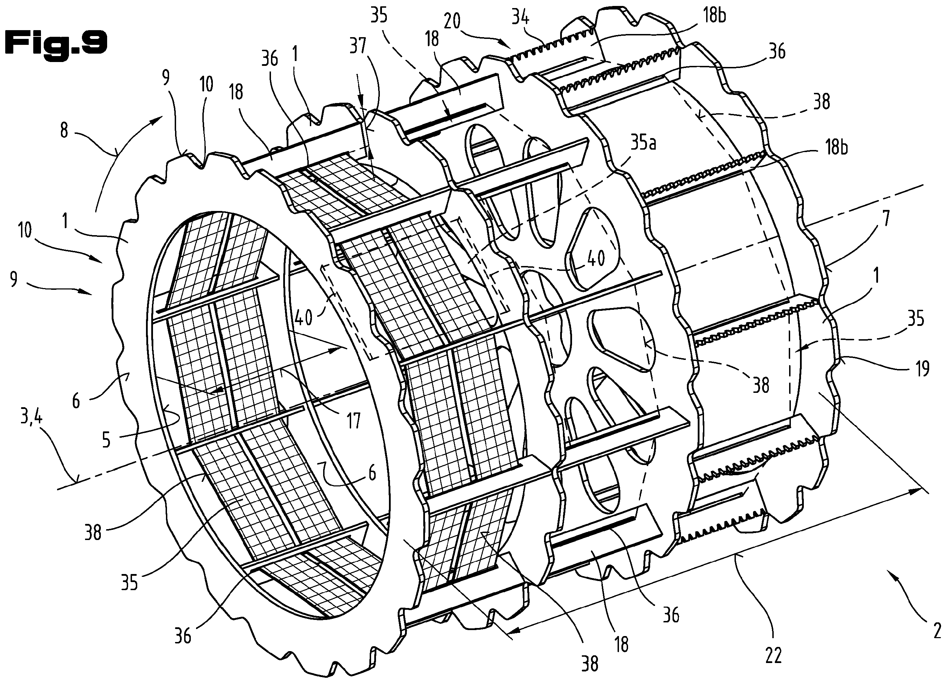

In Fig. 8 und 9 ist eine mögliche Weiterbildung des Arbeitsrades 2 dargestellt, wobei grundsätzlich bezüglich der scheibenförmigen Grundkörper 1 auf die Beschreibungen und Ausführungsform gemäß der vorangegangenen Beschreibung verwiesen sei.

Wie in Fig. 8 und 9 ersichtlich, kann das erfindungsgemäße Arbeitsrad 2, unabhängig von seiner Ausführung, bevorzugt zwischen zumindest zwei (benachbarter) scheibenförmiger Grundkörper 1 zumindest einen Tragkörper 35 aufweisen.

Wie weiters aus Fig. 8 und 9 ersichtlich, kann der Tragkörper in Umfangsrichtung 8 in den Verbindungselementen 18 aufgenommen bzw. gelagert und/oder auch fixiert sein.

In Fig. 8 ist ein Funktionsprinzip des Tragkörpers 35 veranschaulicht, wobei das Arbeitsrad 2 nur teilweise und in Schnittansicht dargestellt ist. Wenn ein mit dem Arbeitsrad 2 versehenes Fahrzeug in einem Offroad-Terrain fährt und dabei vorübergehend auf besonders weiche Gegebenheiten stößt, z.B. Tiefschnee oder Sumpf, kann mittels des Tragkörpers 35 ein Einsinken des Arbeitsrades 2 (bzw. des Fahrzeuges) verhindert werden, indem die Tragfläche 38 auf der Oberfläche 39 des weichen Untergrundmaterials aufliegt. Zudem kann mittels des Profils, insbesondere der Kombination aus Verbindungselemente 18 und Tragfläche 38 auch ein Bodenmaterial in Umfangsrichtung 8 abgetragen und ausgeworfen werden.

Die Verbindungselemente können bevorzugt Ausnehmungen 36 aufweisen, welche vorzugsweise gleich oder größer einem Querschnitt des Tragkörpers 35 sind, sodass dieser durch die Verbindungselemente 18 (bzw. die Ausnehmungen 36) hindurchgeführt ist, wie in Fig. 9 ersichtlich ist. Die Ausnehmungen 36 bzw. der Tragkörper 35 können sich über eine gesamte Breite bezüglich des Abstandes 17 zwischen zwei scheibenförmigen Grundkörpern erstrecken. Die Ausnehmungen 36 können aber auch separat ausgebildet sein, sodass z.B. zwischen zwei benachbarten scheibenförmigen Grundkörpern 1 an einem Verbindungselement 18 zwei Ausnehmungen 36 ausgebildet sind, sodass zwei Tragkörper 35 nebeneinander (in Axialrichtung) aufgenommen sind. Die Ausnehmungen 36 bzw. Teile der Verbindungselemente 18 können diesbezüglich auch grundsätzlich weiter innenliegend ausgebildet sein, sodass die Verbindungselemente beispielsweise radial innenliegende Aufnahmebereiche aufweisen können.

Die Ausnehmungen 36 können ebenfalls mittels einem zuvor erwähnten Verfahren (z.B. gemäß der Darstellung in Fig. 3) hergestellt werden.

Die Ausnehmungen können bevorzugt parallel zur Längsmittelachse 3 bzw. zur Radachse 4 verlaufen und vorzugsweise einen rechteckigen Querschnitt aufweisen.

Der Tragkörper 35 kann auch aus einzelnen Segmenten zusammengesetzt sein, welche z.B. jeweils zwischen zwei Verbindungselemente 18 ausgebildet oder angeordnet sind. Ferner kann der Tragkörper oder Segmente auch an der Außenfläche 20 (nicht dargestellt) der Verbindungselemente befestigt sein, insbesondere wenn diese vertieft zu der Radlauffläche 19 angeordnet sind.

Der Tragkörper 35 kann bevorzugt in Form eines endlosen Bandes ausgebildet sein, welches sich in Umfangsrichtung 8 des Arbeitsrades 2 erstreckt. In einer möglichen Ausführung kann das endlose Band in Umfangsrichtung freilaufend in den Ausnehmungen gelagert sein. Bevorzugt kann in den Ausnehmungen noch eine Reibschicht angeordnet sein, z.B. aus Gummi (oder auf dem Tragkörper), sodass dieser in der Ausnehmung verbessert gehalten ist.

Der Tragkörper kann zudem eine lösbare Verbindungsstelle oder dergleichen aufweisen, mittels dieser er geöffnet werden kann, sodass z.B. ein endloses Band aus dem Arbeitsrad wieder entnommen werden kann.

Wie weiters ersichtlich, ist der Tragkörper 35 bevorzugt in Radialrichtung nach innen versetzt angeordnet, sodass dieser zumindest zu den radialen Erhebungen 9 versetzt ausgebildet ist, vorzugsweise aber zur gesamten Lauffläche 7 in Richtung zu der Längsmittelachse 3 (radial nach innen) versetzt. Diesbezüglich ist eine radialer Versatz 37 angedeutet, vorzugsweise entspricht dieser einer radialen Distanz der Ausnehmungen 36 zu der Lauffläche 7.

Wie in Fig. 9 mit weiteren Tragkörpern 35 strichliert angedeutet ist, kann bevorzugt zwischen jeden der benachbarten scheibenförmigen Grundkörpern 1 des Arbeitsrades 2 zumindest ein Tragkörper 35 vorgesehen sein, sodass jeweils eine Tragfläche 38 über die gesamte Umfangsrichtung 8 ausgebildet ist.

Wie ferner in Fig. 9 strichliert angedeutet ist, kann das Arbeitsrad 2 alternativ oder zusätzlich zu den Ausnehmungen 36 zweite axiale Durchbrüche 40 aufweisen, wobei mittels der zweiten axialen Durchbrüche 40 der strichliert angedeutete Tragkörper 35a in Axialrichtung aufgenommen sein kann, welcher sich zumindest zwischen zwei scheibenförmigen Grundkörpern 1 erstreckt, oder auch über eine Gesamtbreite 22 des Arbeitsrades 2 (nicht dargestellt). Bei einer derartigen Ausführungsform sind bevorzugt mehrere Tragkörper 35a in Umfangsrichtung 8 angeordnet, sodass diese eine umlaufende Fläche zwischen zwei scheibenförmigen Grundkörpern ausbilden.

Ferner kann auch vorgesehen sein, dass sowohl in Radialrichtung als auch in Axialrichtung mehrere Tragkörper 35 vorgesehen sind, sodass sich die Tragkörper zumindest teilweise überlappen, bzw. mehrere axiale und radiale Tragkörper jeweils ineinander verschachtelt angeordnet sind.

Die in Axialrichtung aufgenommenen Tragkörper können bevorzugt ebenfalls denselben radialen Versatz 37 aufweisen.

Ferner ist in Fig. 9 unabhängig vom Tragkörper 35 eine mögliche versetzte Anordnung von Verbindungselementen 18, 18b dargestellt, sodass das Arbeitsrad 2 über die Umfangsrichtung 8 verteilt jeweils in Axialrichtung zwischen einem ersten und zweiten Ende (bzw. Stirnseite) des Arbeitsrades mindestens 2 Verbindungselemente 18, 18b aufweist. Die Verbindungselemente 18, 18b können wiederum in (nicht dargestellte) axiale Durchbrüche eingesetzt sein, wie in der vorangegangenen Beschreibung erwähnt, wobei die Durchbrüche entsprechend der Verbindungselemente ebenfalls versetzt sein können.

Weiters ist unabhängig davon eine mögliche Ausbildung von Strukturelementen 34 an den Verbindungselementen 18b dargestellt, welche ein zusätzliches Arbeitsprofil für unebenes Terrain ausbilden. Die dargestellten Strukturelemente 34 können an allen Verbindungselementen 18 (der Radlauffläche 19 zugewandt) ausgebildet sein, und auch ungleichmäßig oder partiell angeordnet. Bevorzugt könnten diese ebenfalls mittels des erfindungsgemäßen Verfahrens hergestellt werden.

Wie ferner ersichtlich ist, kann der Tragkörper 35 bevorzugt aus einem Material gefertigt, welches eine geringe Biegesteifigkeit aufweist, sodass die Tragfläche 38 aus einzelnen annähernd ebenen Flächen gebildet wird, welche sich zwischen ihren Lagerungspunkten/Fixierungen geradlinig erstrecken, z.B. zwischen den Ausnehmungen 36. Das Material kann z.B. ähnlich einem Spanngurt ausgebildet sein.

Bevorzugt kann der bzw. die Tragkörper derart bereitgestellt werden, dass diese(r) auch wieder einfach vom Arbeitsrad entfernt werden kann, sodass diese(r) nur bei Bedarf eingesetzt werden kann oder auch leicht ausgewechselt werden kann.

Weiters sei erwähnt, dass die erwähnten Tragkörper auch bei derartigen Arbeitsrädern (wie sie z.B. geometrisch/konstruktiv in den Figuren dargestellt und in der vorangegangenen Erläuterungen beschrieben sind) angewandt werden können, welche mittels herkömmlicher Verfahren - anstelle eines thermischen Trennverfahrens - hergestellt wurden, bzw. in weiterer Folge in Fahrzeugen eingesetzt werden können.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Scheibenförmiger Grundkörper | 30 | Arbeitsmaschine |
| 2 | Arbeitsrad | 31 | Radius |
| 3 | Längsmittelachse | 32 | Winkel |
| 4 | Radachse | 33 | Profil |
| 5 | erste Stirnseite | 34 | Strukturelemente |
| 6 | zweite Stirnseite | 35 | Tragkörper |
| 7 | Lauffläche | 36 | Ausnehmungen |
| 8 | Umfangsrichtung | 37 | radialer Versatz |
| 9 | radiale Erhebungen | 38 | Tragfläche |
| 10 | radiale Vertiefungen | 39 | Oberfläche |
| 11 | Außenkontur | 40 | zweite axiale Durchbrüche |
| 12 | Randschicht | | |
| 13 | Schichttiefe | | |
| 14 | radialer Abstand | | |
| 15 | Höhe | | |
| 16 | Außendurchmessers | | |
| 17 | Abstand | | |
| 18 | Verbindungselemente | | |
| 19 | Radlauffläche | | |
| 20 | Außenfläche | | |
| 21 | Durchbruch | | |
| 22 | Gesamtbreite | | |
| 23 | Befestigungsabschnitt | | |
| 24 | Trennwerkzeug | | |
| 25 | Kühlwerkzeug | | |
| 26 | Werkstückplatte | | |
| 27 | Absatz | | |
| 28 | axiale Länge | | |
| 29 | radiale Breite | | |

## Patentansprüche

1. Verfahren zur Herstellung eines Arbeitsrades (2), umfassend die folgenden Schritte
- Bereitstellen von zumindest zwei scheibenförmigen Grundkörpern (1); wobei ein jeweiliger scheibenförmiger Grundkörper (1) folgendes umfasst;
- eine Längsmittelachse (3);
- eine bezüglich der Längsmittelachse (3) radial außenliegende Lauffläche (7), wobei an der Lauffläche (7) radiale Erhebungen (9) und radiale Vertiefungen (10) ausgebildet sind, sodass mittels der radialen Erhebungen (9) und der radialen Vertiefungen (10) in einer Umfangsrichtung (8) eine Außenkontur (11) des scheibenförmigen Grundkörpers (1) gebildet ist;
- Anordnen von Verbindungselementen (18) zwischen den zumindest zwei scheibenförmigen Grundkörpern (1);
- Verbinden der zumindest zwei scheibenförmigen Grundkörper (1) mit den Verbindungselemente (18), sodass die scheibenförmigen Grundkörper (1) entlang ihrer Längsmittelachse (3) beabstandet zueinander angeordnet sind und mittels der Laufflächen (7) eine Radlauffläche (19) des Arbeitsrades (2) gebildet wird,
wobei die scheibenförmigen Grundkörper (1) entlang der Lauffläche (7) mittels eines thermischen Trennverfahrens aus einer Platte entlang der Außenkontur (11) der scheibenförmigen Grundkörper (1) geschnitten werden, sodass die scheibenförmigen Grundkörper (1) eine gehärtete Randschicht (12) an der Lauffläche (7) aufweisen.

2. Verfahren nach Anspruch 1, **dadurch gekennzeichnet, dass** beim thermischen Trennverfahren eine Schnittgeschwindigkeit entlang der Außenkontur (11) angepasst wird, sodass ein Wärmeeintrag im Bereich der radialen Erhebungen und Vertiefungen (9,10) gleichmäßig ist.

3. Verfahren nach Anspruch 1 oder 2, **dadurch gekennzeichnet, dass** die scheibenförmigen Grundkörper (1) axiale Durchbrüche (21) zur Aufnahme der Verbindungselemente (18) aufweisen und die Verbindungselemente (18) in die Durchbrüche (21) eingesetzt werden und mit den scheibenförmigen Grundkörpern (1) verbunden werden.

4. Verfahren nach einem der Ansprüche 1 bis 3, **dadurch gekennzeichnet, dass** zumindest drei scheibenförmigen Grundkörper (1) bereitgestellt werden, wobei der zumindest eine bezüglich einer Radachse (4) innenliegend angeordnete scheibenförmigen Grundkörper (1) axiale Durchbrüche (21) zur Aufnahme der Verbindungselemente (18) aufweist und die bezüglich der Radachse außenliegend angeordneten scheibenförmigen Grundkörper (1) mittels axial durchgängiger Verbindungselemente (18) verbunden werden, wobei die durchgängigen Verbindungselemente (18) in die axialen Durchbrüche (21) des zumindest einen innenliegend angeordneten scheibenförmigen Grundkörper (1) eingesetzt werden und mit den scheibenförmigen Grundkörpern (1) verbunden werden.

5. Verfahren nach einem der Ansprüche 1 bis 4, **dadurch gekennzeichnet, dass** die Schichttiefe (13) der gehärteten Randschicht (12) geringer ist als ein maximaler radialer Abstand (14) zwischen benachbarten radialen Erhebungen (9) und radialen Vertiefungen (10).

6. Verfahren nach einem der Ansprüche 1 bis 5, **dadurch gekennzeichnet, dass** eine Höhe (15) des scheibenförmigen Grundkörpers (1) zwischen 2% und 8% eines Außendurchmessers (16) des scheibenförmigen Grundkörpers (1) beträgt.

7. Verfahren nach einem der Ansprüche 1 bis 6, **dadurch gekennzeichnet, dass** die Verbindungselemente (18) radial außenliegend angeordnet werden, sodass zumindest teilweise mittels einer Außenfläche (20) der Verbindungselemente (18) ein Teil der Radlauffläche (19) des Arbeitsrades (2) ausgebildet wird.

8. Verfahren nach einem der Ansprüche 1 bis 7, **dadurch gekennzeichnet, dass** die zumindest zwei scheibenförmigen Grundkörper (1) bezüglich ihrer jeweiligen Außenkontur (11) in Umfangsrichtung (8) versetzt zueinander angeordnet werden, sodass die radialen Erhebungen und Vertiefungen (9,10) der jeweiligen scheibenförmigen Grundkörper (1) bezüglich der Längsmittelachse (3) nicht in einer gemeinsamen Flucht angeordnet sind.

9. Verfahren nach einem der Ansprüche 1 bis 8, **dadurch gekennzeichnet, dass** die zumindest zwei scheibenförmigen Grundkörper (1) in Umfangsrichtung (8) derart versetzt zueinander angeordnet werden, dass bezüglich einer Draufsicht auf eine Stirnseite des Arbeitsrades (2) mittels der jeweiligen radialen Erhebungen (9) der zumindest zwei scheibenförmigen Grundkörper (1) im Bereich der Radlaufläche (19) ein durchgängiges Profil mit konstantem Radius gebildet wird.

10. Verfahren nach einem der Ansprüche 1 bis 9, **dadurch gekennzeichnet, dass** zwischen zumindest zwei scheibenförmigen Grundkörpern (1) zumindest ein Tragkörper (35) angeordnet wird, wobei mittels des Tragkörpers (35) eine bezüglich der Radlaufläche (19) in Richtung zur Längsmittelachse (3) versetzt angeordnete Tragfläche (38) des Arbeitsrades (2) ausgebildet ist.

11. Verfahren nach Anspruch 10, **dadurch gekennzeichnet, dass** die Verbindungselemente (18) zwischen zumindest zwei scheibenförmigen Grundkörpern (1) Ausnehmungen (36) aufweisen, wobei der zumindest eine Tragkörper (35) in den Ausnehmungen (36) in Umfangsrichtung (8) aufgenommen ist.

12. Verfahren nach Anspruch 10 oder 11, **dadurch gekennzeichnet, dass** der zumindest eine Tragkörper (35) in Form eines endlosen Bandes ausgebildet ist.

13. Fahrzeug für den Einsatz in unebenen Terrain, Gelände oder dergleichen, **dadurch gekennzeichnet, dass** das Fahrzeug zumindest ein mit einem Verfahren gemäß einem der Ansprüche 1 bis 12 hergestelltes Arbeitsrad aufweist.

## Claims

1. A method for producing a working wheel (2), comprising the following steps
- providing at least two disc-shaped base bodies (1); wherein a respective disc-shaped base body (1) comprises the following;
- a longitudinal center axis (3);
- a running surface (7) located radially on the outside with respect to the longitudinal center axis (3), wherein radial elevations (9) and radial depressions (10) are formed on the running surface (7), so that an outer contour (11) of the disc-shaped base body (1) is formed in a circumferential direction (8) by means of the radial elevations (9) and the radial depressions (10);
- arranging connecting elements (18) between the at least two disc-shaped base bodies (1);
- connecting the at least two disc-shaped base bodies (1) with the connecting elements (18), so that the disc-shaped base bodies (1) are arranged at a distance from each other along their longitudinal center axis (3) and a wheel running surface (19) of the working wheel (2) is formed by means of the running surfaces (7),
wherein the disc-shaped base bodies (1) are cut along the running surface (7) from a plate along the outer contour (11) of the disc-shaped base bodies (1) by means of a thermal cutting process, so that the disc-shaped base bodies (1) have a hardened edge layer (12) on the running surface (7).

2. The method according to claim 1, **characterized in that**, during the thermal cutting process, a cutting speed is adapted along the outer contour (11) so that a heat input is uniform in the region of the radial elevations and depressions (9, 10).

3. The method according to claim 1 or 2, **characterized in that** the disc-shaped base bodies (1) have axial openings (21) for receiving the connecting elements (18) and the connecting elements (18) are inserted into the openings (21) and connected to the disc-shaped base bodies (1).

4. The method according to one of claims 1 to 3, **characterized in that** at least three disc-shaped base bodies (1) are provided, wherein the at least one disc-shaped base body (1) arranged on the inside with respect to a wheel axis (4) has axial openings (21) for receiving the connecting elements (18) and the disc-shaped base bodies (1) arranged on the outside with respect to the wheel axis are connected by means of axially continuous connecting elements (18), wherein the continuous connecting elements (18) are inserted into the axial openings (21) of the at least one disc-shaped base body (1) arranged on the inside and are connected to the disc-shaped base bodies (1).

5. The method according to one of claims 1 to 4, **characterized in that** the layer depth (13) of the hardened edge layer (12) is less than a maximum radial distance (14) between adjacent radial elevations (9) and radial depressions (10).

6. The method according to one of claims 1 to 5, **characterized in that** a height (15) of the disc-shaped base body (1) is between 2% and 8% of an outer diameter (16) of the disc-shaped base body (1).

7. The method according to one of claims 1 to 6, **characterized in that** the connecting elements (18) are arranged radially on the outside, so that a part of the wheel running surface (19) of the working wheel (2) is formed at least partially by means of an outer surface (20) of the connecting elements (18).

8. The method according to one of claims 1 to 7, **characterized in that** the at least two disc-shaped base bodies (1) are arranged offset relative to one another with respect to their respective outer contour (11) in a circumferential direction (8), so that the radial elevations and depressions (9, 10) of the respective disc-shaped base bodies (1) are not arranged in a common alignment with respect to the longitudinal center axis (3).

9. The method according to one of claims 1 to 8, **characterized in that** the at least two disc-shaped base bodies (1) are arranged offset with respect to one another in a circumferential direction (8) in such a way that, with respect to a top view onto an end face of the working wheel (2), a continuous profile with a constant radius is formed in the region of the wheel running surface (19) by means of the respective radial elevations (9) of the at least two disc-shaped base bodies (1).

10. The method according to one of claims 1 to 9, **characterized in that** at least one support body (35) is arranged between at least two disc-shaped base bodies (1), wherein by means of the support body (35) a support surface (38) of the working wheel (2), which is arranged offset with respect to the wheel running surface (19) in the direction of the longitudinal center axis (3), is formed.

11. The method according to claim 10, **characterized in that** the connecting elements (18) have recesses (36) between at least two disc-shaped base bodies (1), wherein the at least one support body (35) is received in the recesses (36) in the circumferential direction (8).

12. The method according to claim 10 or 11, **characterized in that** the at least one support body (35) is configured in the form of an endless belt.

13. A vehicle for use on uneven terrain, country or the like, **characterized in that** the vehicle comprises at least one working wheel produced by a method according to one of claims 1 to 12.

## Revendications

1. Procédé de fabrication d'une roue de travail (2), comprenant les étapes suivantes :
- mise à disposition d'au moins deux corps de base (1) en forme de disque ; dans lequel un corps de base (1) en forme de disque respectif comprend :
- un axe central longitudinal (3) ;
- une surface de roulement (7) située radialement à l'extérieur par rapport à l'axe central longitudinal (3),
dans lequel des saillies radiales (9) et des cavités radiales (10) sont formées sur la surface de roulement (7), de sorte qu'une contour extérieur (11) du corps de base (1) en forme de disque est formée dans une direction circonférentielle (8) au moyen des saillies radiales (9) et des cavités radiales (10) ;
- disposition d'éléments de connexion (18) entre les au moins deux corps de base (1) en forme de disque ;
- connexion des au moins deux corps de base (1) en forme de disque avec les éléments de connexion (18), de sorte que les corps de base (1) en forme de disque sont espacés les uns des autres le long de leur axe central longitudinal (3) et qu'une surface de roulement de roue (19) de la roue de travail (2) est formée au moyen des surfaces de roulement (7), dans lequel les corps de base (1) en forme de disque sont découpés le long de la surface de roulement (7) au moyen d'un procédé de découpe thermique à partir d'une plaque le long du contour extérieur (11) des corps de base (1) en forme de disque, de sorte que les corps de base (1) en forme de disque présentent une couche périphérique trempée (12) sur la surface de roulement (7).

2. Procédé selon la revendication 1, **caractérisé en ce que**, lors du procédé de découpe thermique, une vitesse de coupe est adaptée le long du contour extérieur (11), de sorte qu'un apport de chaleur dans la zone des saillies et cavités radiales (9, 10) est uniforme.

3. Procédé selon la revendication 1 ou 2, **caractérisé en ce que** les corps de base (1) en forme de disque présentent des ouvertures axiales (21) pour recevoir les éléments de connexion (18), et les éléments de connexion (18) sont insérés dans les ouvertures (21) et connectés aux corps de base (1) en forme de disque.

4. Procédé selon l'une des revendications 1 à 3, **caractérisé en ce qu'**au moins trois corps de base (1) en forme de disque sont fournis, dans lequel le corps de base (1) en forme de disque disposé au moins à l'intérieur par rapport à un axe de roue (4) présente des ouvertures axiales (21) pour recevoir les éléments de connexion (18), et les corps de base (1) en forme de disque disposés à l'extérieur par rapport à l'axe de roue étant connectés au moyen d'éléments de connexion (18) à passage axial, les éléments de connexion (18) à passage étant insérés dans les ouvertures axiales (21) du corps de base (1) en forme de disque disposé au moins à l'intérieur et étant connectés aux corps de base (1) en forme de disque.

5. Procédé selon l'une des revendications 1 à 4, **caractérisé en ce que** la profondeur de couche (13) de la couche périphérique trempée (12) est inférieure à une distance radiale maximale (14) entre des saillies radiales (9) et des cavités radiales (10) adjacentes.

6. Procédé selon l'une des revendications 1 à 5, **caractérisé en ce qu'**une hauteur (15) du corps de base (1) en forme de disque est comprise entre 2 % et 8 % d'un diamètre extérieur (16) du corps de base (1) en forme de disque.

7. Procédé selon l'une des revendications 1 à 6, **caractérisé en ce que** les éléments de connexion (18) sont disposés radialement à l'extérieur, de sorte qu'au moins partiellement au moyen d'une surface extérieure (20) des éléments de connexion (18), une partie de la surface de roulement de roue (19) de la roue de travail (2) est formée.

8. Procédé selon l'une des revendications 1 à 7, **caractérisé en ce que** les au moins deux corps de base (1) en forme de disque sont disposés décalés les uns par rapport aux autres dans la direction circonférentielle (8) par rapport à leur contour extérieur (11), de sorte que les saillies et cavités radiales (9, 10) des corps de base (1) respectifs en forme de disque ne sont pas alignées sur une ligne commune par rapport à l'axe central longitudinal (3).

9. Procédé selon l'une des revendications 1 à 8, **caractérisé en ce que** les au moins deux corps de base (1) en forme de disque sont disposés décalés les uns par rapport aux autres dans la direction circonférentielle (8) de telle manière que, par rapport à une vue de dessus d'une face avant de la roue de travail (2), un profil continu avec un rayon constant est formé dans la zone de la surface de roulement de roue (19) au moyen des saillies radiales (9) respectives des au moins deux corps de base (1) en forme de disque.

10. Procédé selon l'une des revendications 1 à 9, **caractérisé en ce qu'**entre au moins deux corps de base (1) en forme de disque, au moins un corps porteur (35) est disposé, une surface portante (38) de la roue de travail (2) décalée par rapport à la surface de roulement de roue (19) en direction de l'axe central longitudinal (3) étant formée au moyen du corps porteur (35).

11. Procédé selon la revendication 10, **caractérisé en ce que** les éléments de connexion (18) entre au moins deux corps de base (1) en forme de disque présentent des évidements (36), le corps porteur (35) étant reçu dans les évidements (36) dans la direction circonférentielle (8).

12. Procédé selon la revendication 10 ou 11, **caractérisé en ce que** le corps porteur (35) est conçu sous la forme d'une bande sans fin.

13. Véhicule destiné à être utilisé sur un terrain, un lieu, ou autre, accidenté, **caractérisé en ce que** le véhicule présente au moins une roue de travail fabriquée selon un procédé conforme à l'une des revendications 1 à 12.
